Europäisches Patentamt

European Patent Office

Office européen des brevets

(11) Veröffentlichungsnummer: **0 308 606 B1**

# EUROPÄISCHE PATENTSCHRIFT

(45) Veröffentlichungstag der Patentschrift: **18.03.92**

(51) Int. Cl.5: **G11B 15/675**, G11B 17/04

(21) Anmeldenummer: **88111459.9**

(22) Anmeldetag: **16.07.88**

(54) **Gerät mit Kassetten-Ein-/Aus-zugsvorrichtung.**

(30) Priorität: **26.08.87 DE 3728475**

(43) Veröffentlichungstag der Anmeldung:
**29.03.89 Patentblatt 89/13**

(45) Bekanntmachung des Hinweises auf die
Patenterteilung:
**18.03.92 Patentblatt 92/12**

(84) Benannte Vertragsstaaten:
**AT BE CH DE ES FR GB GR IT LI LU NL SE**

(56) Entgegenhaltungen:
**EP-A- 0 149 532        EP-A- 0 177 133
EP-A- 0 204 585        DE-A- 3 026 600
FR-A- 2 463 968        GB-A- 2 020 081
GB-A- 2 062 337        US-A- 4 450 549**

**PATENT ABSTRACTS OF JAPAN, Band 5, Nr.
126 (P-75)[798], 14. August 1981, Seite 93 P
75; & JP-A-56 65 358 (SHINSHIRASUNA DEN-
KI K.K.) 03-06-1981**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Kammerer, Manfred
Gsod 2
W-7742 St. Georgen(DE)**

**Beschreibung**

Die Erfindung betrifft ein Gerät nach dem Oberbegriff des ersten Anspruchs.

Es ist bekannt, Kassetten für Aufzeichnungs- und/oder Wiedergabe-Geräte zu verwenden. Bei Geräten, wie z- B. Video-Recordern, enthalten die üblichen Kassetten ein Magnetband. Bei solchen Geräten, ebenso aber auch bei CD-Spielern, haben sich als Mittel zum Laden und Entladen Schubladen als benutzerfreundlich in vielen Konstruktionen erwiesen, die jedoch hinsichtlich der Mechanik aufwendig sind und relativ viel Raum im Gerät in Anspruch nehmen.

Ein Beispiel ist die aus der Patentanmeldung GB-A-2020081 bekannte Lösung. Hier ist innerhalb einer manuell bewegbaren Schublade 3 ein Schlitten, "slider" 2, für das Einlegen einer Kassette A vorgesehen. Die Kassette A wird von dem "slider" 2 erfaßt und legt sowohl beim Einfahren als auch beim Ausfahren der Schublade 3 einen größeren Weg als diese zurück. Beim Ausfahren der Schublade 3 wird die Kassette A von dem "slider" 2 in die Entnahmelage gebracht. Bei dieser vorbekannten Konstruktion wird die Bewegungsvervielfachung durch Seilzüge 14 erreicht, die über Rollen 10 laufen. Der Aufwand dieser Lösung mit doppelseitigen Seilzügen 14 und Rollen 10 sowie die konstruktiven Mittel insbesondere im hinteren Teil ergeben einen großen Platzbedarf in der Tiefe und erfordern sehr viele Bauteile.

Der vorliegenden Erfindung lag die Aufgabe zugrunde, eine einfache Mechanik für die Ein-/Auszugvorrichtung zu konstruieren, die einen kompakten, raumsparenden Aufbau ermöglicht.

Diese Aufgabe wird gemäß der Erfindung durch die im Anspruch 1 aufgeführten Merkmale gelöst. Weiterbildungen und Ausgestaltungen sind den Unteransprüchen und der Beschreibung zu entnehmen.

Aufgrund der erfindungsgemäßen Lösung kann eine Vielzahl von Teilen, wie sie nach dem Stand der Technik erforderlich ist, entfallen, beispielsweise Seilzüge, Umlenkrollen, Schlitten für die Kassette, Federn diverser Bauart etc.

In einer Weiterbildung sieht die Erfindung vor, daß die Ein-/Auszugvorrichtung von einem Elektromotor angetrieben ist.

Mittels der Schublade wird die bequem einzulegende Kassette durch die Schubladenbewegung in eine bestimmte Position im Gerät transportiert, wobei sichergestellt ist, daß die Kassette auch wieder durch umgekehrten Bewegungsablauf zurück in die Entnahme- bzw. Wiederladeposition gelangt. Durch eine von der Schublade angetriebene Rollenvorrichtung wird die Kassette während ihres Transportes über einen Teil ihres Weges schneller als die Schublade durch die Haftreibungswirkung der Rollen bewegt, deren Durchmesser größer als das sie antreibende Zahnrad ist. Dadurch ist vorteilhafterweise der Weg der Kassette größer als der der Schublade. Eine solche Konstruktion ist platzsparend innerhalb des Gerätes, arbeitet bei geringem konstruktivem Aufwand einwandfrei und läßt sich kostengünstig herstellen.

Die erfindungsgemäße Konstruktion der Schublade ist besonders für die sehr kleine R-DAT-Kassette für R-DAT-Geräte vorteilhaft, das sie eine kompakte Bauweise ermöglicht und mehr Platz für elektronische Baugruppen ergibt.

Nachfolgend wird an hand der Zeichnung ein Ausführungsbeispiel der Erfindung beschrieben.

Die Zeichnung zeigt in

Figur 1    eine stark vereinfachte Seitenansicht einer Ein-/Aus-zugvorrichtung;

Figur 2    eine Draufsicht auf die gleiche Vorrichtung.

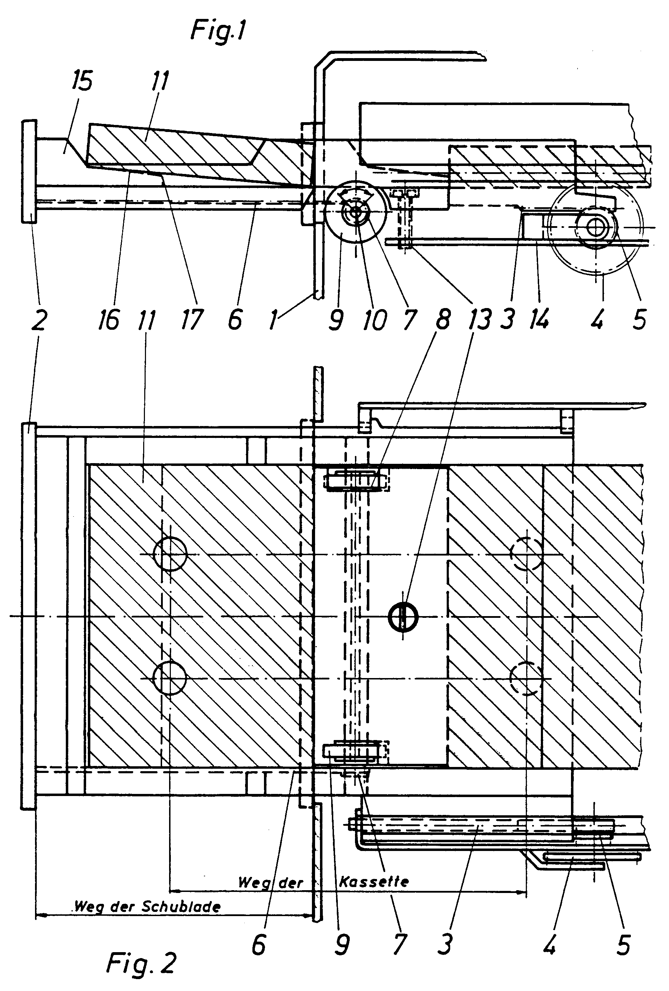

Wie aus beiden Figuren zu entnehmen ist, sind die Außenkonturen 1 des Gerätes angedeutet, in welches eine erfindungsgemäße Ein-/Aus-zugvorrichtung in Form einer von einem Elektromotor angetriebenen Schublade 2 eingebaut ist. Aus der Zeichnung ist zu erkennnen, daß eine Zahnstange 3 seitlich fest mit der Schublade 2 verbunden ist. Der nicht dargestellte Motor treibt über das Zahnrad 4 das auf gleicher Achse angeordnet Ritzel 5 an, das in die Zahnstange 3 eingreift. Eine weitere Zahnstange 6 ist an der Schublade 2 montiert, die mit dem Ritzel 7 derart zusammenwirkt, daß es die beiden Gummirollen 8 und 9 antreibt, die auf gleicher Welle 10 befestigt sind. Der Durchmesser der Gummirollen 8 und 9 ist größer als der Durchmesser des Ritzels 7. Die Lagerung der Welle 10 ist nicht näher gezeigt. Sie ist an der Montageplatte 12 vorgenommen, die durch die zentrale Schraube 13 an der Platte 14 fixiert ist, die ihrerseits Teil des nicht gezeichneten Gerätechassis ist. Beide Figuren zeigen eine R-DAT-Kassette 11 in der Aufnahme der offenen Schublade 2. Wie Figur 1 deutlich zeigt besitzt die Aufnahme zwei aufeinander folgende Schrägen. An der ersten, steileren Schräge 15 gleitet die Kassette 11 beim Einlegen bis in die gezeigte Position. Wenn nun der Antrieb der Schublade 2 aktiviert wird, nimmt sie die Kassette 11 mit bis sie an ihrer Unterseite von der sich drehenden Gummirollen 8 und 9 durch Haftreibung erfaßt wird und dadurch angehoben schneller als die Schubladenbewegung verläuft in das Gerät hineingeschoben wird. Dabei gleitet die hintere Unterkante der Kassette 11 entlang der zweiten, weniger steilen Schräge 16 bis sie, wie gestrichelt eingezeichnet, von der Kante 17 erfaßt wird. Die Schublade 2 übt dabei auf ihrem letzten Weg bis zum ganz gestrichtelt eingezeichneten eingefahrenen Zustand mittels der Kante 17 einen Druck auf die Kassette 11 aus, der einen nicht eingezeichneten Schieber an ihrer Unterseite öffnet. Dieses Detail sowie die nachfolgende Absenkung der Kassette 11 in ihre Betriebsposition sind nicht eingezeichnet, da sie nicht erfindungswesentlich sind. Der Kassetteneinzug ist damit abgeschlossen. Der umgekehrte Vorgang, der Kassettenauszug, bis in die dargestellte, der Startposition entsprechende Entnahmeposition verläuft im Einzelnen umgekehrt wie der Einzug. Die Kassette 11 wird von der heraus startenden Schublade 2, das ist die Bewegungsrichtung nach links in der Zeichnung, nach einer vorangegangenen und nicht dargestellten Aufwärtsbewegung aus der Betriebsposition in die gestrichelte Position von ebenfalls nicht eingezeichneten Greifmitteln gegen die Kante 17 gehalten und von der Schublade 2 mitgenommen. Sobald ihre jetzige Vorderkante von den Gummirollen 8, 9 erfaßt und sie angehoben und alsdann schneller als die Schubladenbewegung transportiert wird, gelangt sie schließlich über die Schräge 16 in die dargestellte Position in der Endstellung der ausgefahrenen Schublade. Hier ist die Kassette 11 bequem entnehmbar.

Wie unterhalb der Figur 2 angedeutet, ist der bei Ein-zug bzw. Aus-zug von der Schublade 2 zurückgelegte Weg erheblich kleiner als der Weg der Kassette. Das erklärt die Tatsache, daß diese Konstruktion eine raumsparende Bauform erlaubt.

**Patentansprüche**

1. Gerät zur Aufzeichnung und/oder Wiedergabe von Kassetten (11) für einen Aufzeichnungsträger mit einer Ein-/Auszugvorrichtung für die Kassette (11), wobei beim automatischen Einzug der Kassette (11) mittels der Ein-/Auszugvorrichtung die Kassette von der Vorrichtung erfaßt und in die Betriebsposition gebracht wird und wobei beim Ausfahren die Kassette (11) mittels der Vorrichtung erfaßt und in die Entnahmelage gebracht wird, wobei die Vorrichtung als eine mit Antriebsmitteln versehene Schublade (2) ausgebildet ist, deren Bewegung beim Einfahren und Ausfahren einen kürzeren Weg zurücklegt als die transportierte Kassette, **dadurch gekennzeichnet, daß** die Antriebsmittel eine oder mehrere Friktionsrollen (8,9) aufweisen, deren Umfang mit der Kassette in Kontakt ist.

2. Gerät gemäß Anspruch 1, **dadurch gekennzeichnet, daß** die Schublade (2) einen ersten Anschlag (Verbindungslinie der Schrägen (15, 16) für die Kassette (11) aufweist, der die Einlegeposition und/oder die Entnahmeposition der Kassette (11) definiert.

3. Gerät gemäß den Ansprüchen 1 oder 2, **dadurch gekennzeichnet, daß** die Rollen (8, 9) aus Material mit hohem Reibungskoeffizienten bestehen.

4. Gerät gemäß den Ansprüchen 1, 2 oder 3, **dadurch gekennzeichnet, daß** die Schublade (2) mittels einer ersten Zahnstange (3) antreibbar ist.

5. Gerät gemäß den Ansprüchen 1, 2, 3 oder 4, **dadurch gekennzeichnet, daß** die Schublade (2) einen zweiten Anschlag (17) aufweist, daß beim Einzug der Kassette (11) diese Schublade (2) die Kassette (11) so weit einzieht, bis der zweite Anschlag (17) wirksam wird, daß beim Ausfahren der Schublade (2) die Kassette mittels der Rolle(n) (8,9) über den zweiten Anschlag (17) angehoben und bis zum ersten Anschlag geschoben wird.

6. Gerät nach einem oder mehreren der voranstehenden Ansprüche, **dadurch gekennzeichnet, daß** die die Schublade (2) mit einer zweiten Zahnstange (6) ausgerüstet ist, die in ein Ritzel (7) eingreift, auf dessen Welle (10) die Rolle(n) (8, 9) sitzen und daß der Durchmesser der Rolle(n) (8, 9) größer gewählt ist als der Durchmesser des Ritzels (7).

7. Gerät nach Anspruch 6, **dadurch gekennzeichnet, daß** zwei Rollen (8, 9) auf der Welle (10) vorgesehen sind, die die Kassette nahe ihrer Außenkanten erfassen.

8. Gerät nach einem oder mehreren der vorangangenen Ansprüche, **dadurch gekennzeichnet, daß** zwischen dem ersten und dem zweiten Anschlag (17) eine Schräge (16) vorgesehen ist, auf der die Kassette (11) gleiten kann.

9. Gerät nach einem oder mehreren der vorstehenden Ansprüche, **dadurch gekennzeichnet, daß** die Kassette (11) ein Magnetband als Aufzeichnungsträger enthält.

10. Gerät nach einem oder mehreren der vorstehenden Ansprüche, **dadurch gekennzeichnet, daß** die Kassette (11) einen scheibenförmigen Aufzeichnungsträger enthält.

11. Gerät nach einem oder mehreren der vorstehenden Ansprüche, **dadurch gekennzeichnet, daß** die Kassette (11) eine R-DAT-Kassette ist.

12. Gerät nach einem oder mehreren der vorstehenden Ansprüche, **dadurch gekennzeichnet, daß** die Ein-/Auszugvorrichtung von einem Elektromotor angetrieben ist.

## Claims

1. Appliance for the recording and/or playback of cassettes (11) for a recording medium, comprising a draw-in/extraction device for the cassette (11), in which, when the cassette (11) is automatically drawn in by the draw-in/extraction device, it is gripped by the device and brought into the operating position, and upon moving out the cassette (11) is gripped by the device and brought into the removal position, which device is formed as a drawer (2), which is provided with drive means and the travel of which upon moving in and out covers a shorter distance than the conveyed cassette, characterised in that the drive means comprise one or more friction rollers (8, 9), the circumference of which is in contact with the cassette.

2. Appliance according to claim 1, characterised in that the drawer (2) comprises a first stop (connecting line of the slopes (15, 16)) for the cassette (11), which defines the insertion position and/or the removal position of the cassette (11).

3. Appliance according to claim 1 or 2, characterised in that the rollers (8, 9) consist of a material with a high coefficient of friction.

4. Appliance according to claim 1, 2 or 3, characterised in that the drawer (2) can be driven by a first rack (3).

5. Appliance according to claim 1, 2, 3 or 4, characterised in that the drawer (2) comprises a second stop (17), that when the cassette (11) is drawn in this drawer (2) draws in the cassette (11) until the second stop (17) becomes effective, and that when the drawer (2) is moved out the cassette is raised by the roller(s) (8, 9) above the second stop (17) and pushed up to the first stop.

6. Appliance according to one or more of the preceding claims, characterised in that the drawer (2) is provided with a second rack (6), which engages with a pinion (7), on the shaft (10) of which the roller(s) (8, 9) is/are mounted, and that the diameter of the roller(s) (8, 9) is greater than the diameter of the pinion (7).

7. Appliance according to claim 6, characterised in that two rollers (8, 9) are provided on the shaft (10), which rollers grip the cassette close to its outer edges.

8. Appliance according to one or more of the preceding claims, characterised in that a slope (16) is provided between the first and the second stop (17), on which slope the cassete (11) can slide.

9. Appliance according to one or more of the preceding claims, characterised in that the cassette contains a magnetic tape as recording medium.

10. Appliance according to one or more of the preceding claims, characterised in that the cassette (11) contains a disc-shaped recording medium.

11. Appliance according to one or more of the preceding claims, characterised in that the cassette (11) is a R-DAT- cassette.

12. Appliance according to one or more of the preceding claims, characterised in that the draw-in/extraction device is driven by an electric motor.

## Revendications

1. Appareil pour l'enregistrement et/ou la lecture de cassettes (11) pour un support d'enregistrement avec un dispositif d'entrée et de sortie pour la cassette (11)la cassette (11) étant saisie, lors de l'entrée automatique de la cassette (11), au moyen du dispositif d'entrée et de sortie par le dispositif et étant amenée dans la position de service et, lors de la sortie la cassette (11), étant saisie au moyen du dispositif et étant amenée dans la position de prélèvement, le dispositif étant configuré comme un tiroir (2) équipé d'organes d'entraînement, tiroir dont le déplacement lors de l'entrée et de la sortie effectue un parcours plus court que la cassette transportée, **caractérisé en ce** que les organes d'entraînement présentent un ou plusieurs galets de friction (8, 9) dont la périphérie est en contact avec la cassette.

2. Appareil selon la revendication 1, **caractérisé en ce** que le tiroir présente une première butée (ligne de jonction des déclivités (15, 16) pour la cassette (1) qui définit la position d'insertion et/ou la position de prélèvement de la cassette (11).

3. Appareil selon les revendications 1 ou 2, **caractérisé en ce** que les galets (8, 9) sont constitués par une matière à coefficient de friction élevée.

4. Appareil selon les revendications 1, 2 ou 3, **caractérisé en ce** que le tiroir (2) peut être entraîné au moyen d'une première crémaillère (3).

5. Appareil selon les revendications 1, 2, 3 ou 4, **caractérisé en ce** que le tiroir présente une seconde butée (17), que, lors de l'entrée de la cassette (11), ce tiroir (2) fait entrer la cassette (11) jusqu'à ce que la seconde butée (17) devienne efficace, que, lors de la sortie du tiroir (2), la cassette est soulevée au moyen du/des galet (s) au-dessus de la seconde butée (17) et qu'elle est poussée jusqu'à la première butée.

6. Appareil selon l'une ou plusieurs des revendications précédentes, **caractérisé en ce** que le tiroir (2) est équipé d'une seconde crémaillère (6) qui s'engrène dans un pignon (7) sur l'arbre (10) duquel se trouve(nt) le(s) galet(s) (8, 9) et que le diamètre du/des galet(s) est sélectionné supérieur au diamètre du pignon (7).

7. Appareil selon la revendication 6, **caractérisé en ce** que deux galets (8, 9), qui saisissent la cassette près de ses arêtes extérieures. sont prévus sur l'arbre (10).

8. Appareil son l'une ou plusieurs des revendications précédentes, **caractérisé en ce** qu'une déclivité (16) sur laquelle la cassette (11) peut glisser est prévue entre la première et la seconde butée (17).

9. Appareil selon l'une ou plusieurs des revendications précédentes, **caractérisé en ce** que la cassette (11) présente une bande magnétique comme support d'enregistrement.

10. Appareil selon l'une ou plusieurs des revendications précédentes, **caractérisé en ce** que la cassette (11) contient un support d'enregistrement en forme de disque.

11. Appareil selon l'une ou plusieurs des revendications précédentes, **caractérisé en ce** que la cassette (11) est une cassette R-DAT.

12. Appareil selon l'une ou plusieurs des revendications précédentes, **caractérisé en ce** que le dispositif d'entrée et de sortie est entraîné par un moteur électrique.

*Fig.1*

*Fig.2*

Weg der Kassette

Weg der Schublade